# EUROPEAN PATENT APPLICATION

(11) **EP 4 297 130 A1**
(43) Date of publication of application: **27.12.2023**
(21) Application number: 23769098.7
(22) Date of filing: 19.04.2023
(51) Int. Cl.: H01M 4/62, H01M 4/48, H01M 10/0525

(54) **NEGATIVE ELECTRODE MATERIAL AND PREPARATION METHOD THEREFOR, AND LITHIUM-ION BATTERY**

(30) Priority: 21.04.2022 CN 202210427071; 30.06.2022 CN 202210769600
(71) Applicant: BTR NEW MATERIAL GROUP CO., LTD., Shenzhen, Guangdong 518106 (CN); Huizhou BTR New Material Technology Co., Ltd., Huizhou, Guangdong 516200 (CN); Dingyuan New Energy Technology Co., Ltd., Huizhou, Guangdong 516227 (CN)
(72) Inventor: DENG, Zhiqiang, Shenzhen, Guangdong 518106 (CN); XIE, Wei, Shenzhen, Guangdong 518106 (CN); PANG, Chunlei, Shenzhen, Guangdong 518106 (CN); REN, Jianguo, Shenzhen, Guangdong 518106 (CN); HE, Xueqin, Shenzhen, Guangdong 518106 (CN)
(74) Representative: Meroni, Francesca
(86) International application number: PCT/CN2023/089279
(87) International publication number: WO 2023/202636

(57) **Abstract**

The present disclosure relates to the technical field of secondary batteries, and in particular to a negative electrode material and a preparation method thereof and a lithium-ion battery, wherein a crest factor A of particle size distribution of the negative electrode material satisfies: 0<A≤3, and wherein A=(D₉₅-D₅)/[2.5*(D₇₅-D₂₅)], and D₉₅, D₅, D₇₅, and D₂₅ respectively represent particle sizes of the negative electrode material when a volume percentage content on a cumulative curve reaches 95%, 5%, 75%, and 25%. The negative electrode material in the present disclosure has a suitable crest factor A, which can ensure consistency of particles of the negative electrode material, so that a coated electrode sheet has good consistency, further the performance consistency of the battery is high, and the battery performance is improved.

## Description

### Cross-reference to Related Applications

The present disclosure claims priority to the Chinese patent application CN2022104270714 filed with the Chinese Patent Office on April 21, 2022 and entitled "Negative Electrode Material and Preparation Method thereof and Lithium-ion battery", and the Chinese patent application CN2022107696009 filed with the Chinese Patent Office on June 30, 2022 and entitled "Silicon-based Negative Electrode Material and Preparation Method thereof and Lithium-ion battery", the contents of which are incorporated herein by reference in entirety.

### Technical Field

The present disclosure relates to the technical field of secondary batteries, and in particular to a negative electrode material and a preparation method thereof and a lithium-ion battery.

### Background Art

With the continuous expansion and deepening of the application of lithium-ion batteries, there are increasing requirements for the performance of lithium-ion batteries, especially in terms of energy density of batteries. Conventional graphite negative electrode materials, due to their characteristic of relatively low theoretical gram capacity and relatively low theoretical specific capacity, are no longer enough to meet the growing market demands. As a negative electrode material having a high specific capacity, silicon-based materials have attracted attention in recent years.

The silicon-based negative electrode material has the specific capacity exceeding 3000mAh/g, but when being applied to the lithium-ion batteries, has relatively poor cycle stability and a relatively high battery expansion rate compared with the graphite material, thus the practical application thereof is restricted. Therefore, to develop a material with good cycle stability and a low expansion rate is of great significance.

The cycle and expansion properties of the lithium-ion battery can be improved by improving properties such as chemical structure and electrical conductivity of the battery material, and also can be improved by adjusting the properties of the battery material and improving the properties of a battery electrode sheet, for example, distribution uniformity and consistency of material particles in the electrode sheet. However, the prior art has the problems of uneven distribution and poor consistency of material particles in the electrode sheet.

### Summary

The present disclosure provides a negative electrode material, wherein a crest factor A of particle size distribution of the negative electrode material satisfies: 0<A≤3, and wherein A=(D₉₅-D₅)/[2.5*(D₇₅-D₂₅)], and D₉₅, D₅, D₇₅, and D₂₅ respectively represent particle sizes of the negative electrode material when a volume percentage content on a cumulative curve reaches 95%, 5%, 75%, and 25%.

The negative electrode material includes a silicon-based active material, wherein the silicon-based active material includes at least one of SiOₓ, SiOₓ/C, SiOₓ/M, Si, Si/C, and Si/M, 0<x≤2, and M includes at least one of metal, nonmetal, metal oxide, and nonmetal oxide.

Optionally, the particle size distribution of the negative electrode material is: 0<D₅≤65 µm, 0<D₂₅≤69 µm, 0<D₇₅≤75 µm, and 0<D₉₅≤79 µm.

Optionally, an infrared spectrum of the negative electrode material tested in a range of wave number of 3200 cm⁻¹-3600 cm⁻¹ has a broad peak.

Optionally, wadell degree of sphericity of the negative electrode material is greater than or equal to 0.8.

Optionally, particle size D50 of the silicon-based active material is greater than 0 µm, and equal to or less than 80 µm.

Optionally, a specific surface area of the silicon-based active material is 0-10 m²/g, and is other than 0.

Optionally, tap density of the silicon-based active material is 0.5 g/m³~2 g/m³.

Optionally, the negative electrode material further includes a doping material doped in the silicon-based active material.

Optionally, the negative electrode material further includes a doping material doped in the silicon-based active material, and the doping material includes at least one of an alkali metal, an alkali-earth metal, an alkali metal oxide, and an alkali-earth metal oxide.

Optionally, the negative electrode material further includes a doping material doped in the silicon-based active material, and a weight percentage b of the doping material in the negative electrode material satisfies: 0<b≤20%.

Optionally, a sorting coefficient B of the particle size distribution of the negative electrode material satisfies: 0<B≤3, wherein B=(D₈₄-D₁₆)/4+(D₉₅-D₅)/6.6, D₈₄, D₁₆, D₉₅, and D₅ respectively represent particle sizes of the negative electrode material when a volume percentage content on a cumulative curve reaches 84%, 16%, 95%, and 5%.

Optionally, the particle size distribution of the negative electrode material is: 0<D₅≤65 µm, 0<D₁₆≤67 µm, 0<D₈₄≤77 µm, and 0<D₉₅≤79 µm.

Optionally, the sorting coefficient B and the crest factor A of the particle size distribution of the negative electrode material satisfy: 0<B/A≤5.

Optionally, the negative electrode material further includes a coating layer located on a surface of the silicon-based active material, and the coating layer includes at least one of a flexible polymer and a conductive material.

Optionally, the conductive material includes flake graphite and a nanocarbon material.

Optionally, the flexible polymer includes a natural flexible polymer and/or a synthetic flexible polymer.

Optionally, the flexible polymer includes at least one of polyolefin and derivatives thereof, polyvinyl alcohol and derivatives thereof, polyacrylic acid and derivatives thereof, polyamide and derivatives thereof, carboxymethyl cellulose and derivatives thereof, alginic acid and derivatives thereof, and polycarbonate and derivatives thereof.

Optionally, the flexible polymer has a weight-average molecular weight of 2000-1000000.

Optionally, the flexible polymer contains a thermally crosslinked functional group, and the thermally crosslinked functional group includes at least one of an epoxy group, a carboxyl group, a hydroxyl group, an amino group, a double bond, and a triple bond.

Optionally, the flake graphite includes natural flake graphite and/or artificial flake graphite.

Optionally, the nanocarbon material includes at least one of conductive graphite, graphene, carbon nanotube, and carbon nanofiber.

Optionally, based on a total mass of the negative electrode material being 100%, a mass percentage of the flexible polymer is 0-10%, excluding 0.

Optionally, based on a total mass of the negative electrode material being 100%, a mass percentage of the flake graphite is 0-20%, excluding 0.

Optionally, based on a total mass of the negative electrode material being 100%, a mass percentage of the nanocarbon material is 0-5%, excluding 0.
optionally, the coating layer has a thickness of 10 nm~5000 nm.

Optionally, a mass proportion of the coating layer in the negative electrode material is 0-20%, excluding 0.

Optionally, the mass proportion of the coating layer in the negative electrode material is 2%-10%.

The present disclosure further provides a preparation method of a negative electrode material, includes the following steps:
preparing a powdered negative electrode material;
adjusting a particle size of the prepared powdered negative electrode material to obtain the negative electrode material, wherein a crest factor A of particle size distribution of the negative electrode material satisfies: 0<A≤3, and wherein A=(D₉₅-D₅)/[2.5*(D₇₅-D₂₅)], and D₉₅, D₅, D₇₅, and D₂₅ respectively represent particle sizes of the negative electrode material when a volume percentage content on a cumulative curve reaches 95%, 5%, 75%, and 25%; and
the negative electrode material includes a silicon-based active material, and the silicon-based active material includes at least one of SiOₓ, SiO_{X}/C, SiOₓ/M, Si, Si/C, and Si/M, wherein 0<x≤2, and the M includes at least one of metal, nonmetal, metal oxide, and nonmetal oxide.

Optionally, a sorting coefficient B of the particle size distribution of the negative electrode material satisfies: 0<B≤3, wherein B=(D₈₄-D₁₆)/4+(D₉₅-D₅)/6.6, and D₈₄, D₁₆, D₉₅, and D₅ respectively represent particle sizes when a volume percentage content on a cumulative curve reaches 84%, 16%, 95%, and 5%.

Optionally, a method of preparing the powdered negative electrode material includes: pulverizing a silicon-based active material to obtain the powdered negative electrode material.

Optionally, the method of pulverizing includes crushing and ball milling.

Optionally, an apparatus used for the crushing includes a crusher, and a crushing power p of the crusher satisfies: 0<p≤300 kW.

Optionally, an apparatus used for the ball milling includes a ball mill, and a rotational speed v1 of the ball mill satisfies: 0<v1≤1500 rpm.

Optionally, an apparatus used for adjusting the particle size includes a classifier; and a frequency f of an induced draft fan of the classifier satisfies: 0<f≤100 Hz.

Optionally, the sorting coefficient B and the crest factor A satisfy: 0<B/A≤5.

Optionally, the particle size D50 of the silicon-based active material is greater than 0 µm, and less than or equal to 80 µm.

Optionally, the method of preparing the powdered negative electrode material further includes: carbon-coating the pulverized silicon-based active material with a carbon material to obtain the powdered negative electrode material, wherein a weight percentage a of the carbon material in the negative electrode material satisfies: 0<a≤15%.

Optionally, the method of preparing the powdered negative electrode material further includes: polymer-coating the pulverized silicon-based active material or carbon-coating the pulverized silicon-based active material with a carbon material to obtain the powdered negative electrode material.

Optionally, a method of the polymer-coating includes the following steps:
dissolving a flexible polymer in a solvent to obtain a flexible polymer solution;
adding a conductive material to the flexible polymer solution under a condition of stirring, wherein the conductive material contains flake graphite and a nanocarbon material, to obtain a mixed coating solution;
adding an anti-solvent to the mixed coating solution, and stirring the mixture, to obtain a supersaturated mixed coating solution;
adding a silicon-based active substance to the supersaturated mixed coating solution under a condition of stirring, and then performing stirring and separating, to obtain a negative electrode material precursor; and
performing a thermal treatment on the negative electrode material precursor, to obtain the powdered negative electrode material.

Optionally, the flexible polymer contains a thermally crosslinked functional group, and the thermally crosslinked functional group includes at least one of an epoxy group, a carboxyl group, a hydroxyl group, an amino group, a double bond, and a triple bond.

Optionally, the solvent includes at least one of water, methanol, ethanol, polypyrrolidone, isopropanol, acetone, petroleum ether, tetrahydrofuran, ethyl acetate, N,N-dimethylacetamide, N,N-dimethylformamide, n-hexane, and halogenated hydrocarbon.

Optionally, the anti-solvent includes a poor solvent for the flexible polymer.

Optionally, the anti-solvent includes at least one of methanol, ethanol, polypyrrolidone, isopropanol, acetone, petroleum ether, tetrahydrofuran, ethyl acetate, N,N-dimethylacetamide, N,N-dimethylformamide, n-hexane, and halogenated hydrocarbon.

Optionally, a temperature of the thermal treatment is 100 ºC-400 ºC.

Optionally, the thermal treatment lasts for 2 h-12 h.

Optionally, the method of preparing the powdered negative electrode material further includes: doping the pulverized silicon-based active material with a doping material to obtain the powdered negative electrode material.

Optionally, the doping material includes at least one of an alkali metal, an alkali-earth metal, an alkali metal oxide, and an alkali-earth metal oxide.

Optionally, a weight percentage b of the doping material in the negative electrode material satisfies: 0<b≤20%.

The present disclosure further provides a lithium-ion battery, including the negative electrode material according to any one of the above or the negative electrode material prepared by the preparation method of any one of the above.

### Brief Description of Drawings

FIG. 1 is a flowchart of a preparation method of a negative electrode material in the present disclosure;
FIG. 2 is a diagram of particle size distribution of a negative electrode material of the lithium-ion battery obtained in Example 1 of the present disclosure;
FIG. 3 is a diagram of particle size distribution of a negative electrode material of the lithium-ion battery obtained in Example 13 of the present disclosure;
FIG. 4 is a diagram of particle size distribution of a negative electrode material of the lithium-ion battery obtained in Example 17 of the present disclosure;
FIG. 5 is a diagram of particle size distribution of a negative electrode material of the lithium-ion battery obtained in Example 22 of the present disclosure;
FIG. 6 is a diagram of particle size distribution of a negative electrode material of the lithium-ion battery obtained in Comparative Example 1 of the present disclosure;
FIG. 7 is an SEM diagram of the negative electrode material of the lithium-ion battery obtained in Example 1 of the present disclosure;
FIG. 8 is an SEM diagram of the negative electrode material of the lithium-ion battery obtained in Example 13 of the present disclosure;
FIG. 9 is an SEM diagram of the negative electrode material of the lithium-ion battery obtained in Example 17 of the present disclosure;
FIG. 10 is an SEM diagram of the negative electrode material of the lithium-ion battery obtained in Example 22 of the present disclosure; and
FIG. 11 is an SEM diagram of the negative electrode material of the lithium-ion battery obtained in Comparative Example 1 of the present disclosure.

The drawings herein are incorporated into the description and form a part of the description, show examples complying with the present disclosure, and are used to explain the principle of the present disclosure together with the description.

### Detailed Description of Embodiments

The following is exemplary embodiments of the present disclosure, and it should be indicated that those ordinarily skilled in the art still could make several improvements and modifications, without departing from the principle of the examples of the present disclosure, and all of these improvements and modifications are also considered as within the scope of protection of the examples of the present disclosure.

### Definitions of terms

As used herein, the term "granularity", which can be used interchangeably with the term "particle size", refers to size of a particle, the granularity of a spherical particle is represented by diameter, and for an irregular particle, diameter of a sphere having the same behavior as the particle can be used as an equivalent diameter of this particle.

As used herein, the term "cumulative curve", also referred to as "cumulative frequency curve", is a method of representing a cumulative frequency of a deposited substance (gravel) with an image.

As used herein, the term "wadell degree of sphericity" refers to a degree to which a particle shape is close to a sphere, and is generally defined as a ratio of a surface area of a sphere with a volume equal to that of a to-be-measured particle to a surface area of the to-be-measured particle, and an equation is: degree of sphericity=calculated surface area of a sphere with a volume equal to that of a particle/specific surface area of the particle measured by a specific surface area meter.

An embodiment of the present disclosure provides a negative electrode material (silicon-based negative electrode material), wherein a crest factor A of particle size distribution of the negative electrode material satisfies: 0<A≤3, and wherein A=(D₉₅-D₅)/[2.5*(D₇₅-D₂₅)], D₉₅, D₅, D₇₅, and D₂₅ respectively represent particle sizes when a volume percentage content on a cumulative curve reaches 95%, 5%, 75%, and 25%; and
the negative electrode material includes a silicon-based active material (active material), and the silicon-based active material includes at least one of SiOₓ, SiO_{X}/C, SiOₓ/M, Si, Si/C, and Si/M, wherein 0<x≤2, and M includes at least one of metal, nonmetal, metal oxide, and nonmetal oxide.

In some embodiments, SiOₓ may be a single compound such as SiO₂, also may be a heterogeneous compound, for example, consisting of one or more of SiO₂, SiO_{1.5}, SiO, SiO_{0.5}, etc., and also may be a composite material containing Si and SiO₂.

In some embodiments, the SiOₓ/C may be an SiOₓ material containing carbon.

In some embodiments, SiOₓ/M may be a composite material containing SiOₓ and M, and also may be a composite material of a material containing Si and a material containing three elements M, Si, and O or constituent thereof.

In some embodiments, Si/M may be a composite material containing two elements Si and M or constituents. In the above solution, by adjusting the granularity (particle size) of the negative electrode material, a negative electrode material with suitable particle size distribution is obtained, and the problems such as relatively poor electrical conductivity and relatively poor cycle and rate capabilities existing in the existing negative electrode materials can be solved. In the present solution, by adjusting the crest factor A of the particle size of the negative electrode material to satisfy 0<A≤3, distribution at tail ends of two sides of the granularity (particle size) distribution curve (i.e., granularity distribution) of the negative electrode material can be more concentrated (centralized), and particles that differ too much from a median value of the particle size will not appear. Optionally, the crest factor A may be 0.5, 1, 1.2, 1.5, 1.8, 2, 2.5, 2.8, or 3 etc., or an interval value between any two endpoint values in the above, and definitely also may be other values within the above range, which is not limited herein. By reasonably selecting the crest factor A of the particle size distribution, consistency of various particles of the negative electrode material can be guaranteed, so that when the negative electrode material is subjected to slurry adjustment and coating, the stability of the slurry is improved, and a binder and a conductive agent have better distribution consistency on surfaces of different particles of the negative electrode material, so that a coated electrode sheet has good consistency, and different particles have high consistency in expansion and contraction in a charging and discharging process, it will not cause the electrode sheet to be extremely easily destroyed, deteriorate the cycle performance of the battery, or increase the expansion of the battery due to uneven expansion and contraction of local particles of the electrode sheet, finally, the performance consistency of the battery is high, and because large differences in the granularity of the material particles are avoided, the conductive agent can be uniformly and effectively attached to various material particles, and the rate capability of the battery is improved. By specially defining the silicon-based active material in the negative electrode material, the prepared negative electrode material can be allowed to have an ideal high specific capacity. When A>3, particles greatly different from the median particle size exist in the material, which results in a relatively large difference between the granularities of various particles of the material, and after performing coating to form the electrode sheet, in the cycling process of the battery, stress is concentrated partially, so that the electrode sheet is pulverized or even falls off, and the battery fails relatively quickly.

The present solution is introduced in detail below.

In some embodiments, the particle size distribution of the negative electrode material is: 0<D₅≤65 µm, 0<D₂₅≤69 µm, 0<D₇₅≤75 µm, and 0<D₉₅≤79 µm.

In some embodiments, the sorting coefficient B of the particle size distribution of the negative electrode material satisfies: 0<B≤3, wherein B=(D₈₄-D₁₆)/4+(D₉₅-D₅)/6.6, and D₈₄, D₁₆, D₉₅, and D₅ respectively represent particle sizes of the negative electrode material when a volume percentage content on a cumulative curve reaches 84%, 16%, 95%, and 5%.

In the present solution, by selecting the sorting coefficient B of the particle size distribution of the negative electrode material to satisfy 0<B≤3, it can be ensured that the distribution of the granularity of the negative electrode material in a middle segment (between two sides) of the granularity distribution curve is more concentrated. Thus, when the negative electrode material is made into the electrode sheet with the binder, the binder is further evenly and consistently distributed, thus improving peel strength of the electrode sheet, and facilitating construction of a stable and complete conductive network with the electrode sheet.

By selecting the sorting coefficient B of the particle size, it can be ensured that the granularity distribution of the negative electrode material is concentrated, and optionally, the sorting coefficient B may be 0.5, 1, 1.2, 1.5, 1.8, 2, 2.5, 2.8, or 3 etc., or an interval value between any two endpoint values in the above, and definitely also may be other values in the above range, which is not limited herein.

In some embodiments, the particle size distribution of the negative electrode material is: 0<D₅≤65 µm, 0<D₁₆≤67 µm, 0<D₈₄≤77 µm, and 0<D₉₅≤79 µm.

In some embodiments, the sorting coefficient B and the crest factor A satisfy: 0<B/A≤5.

Optionally, the ratio B/A of the sorting coefficient B to the crest factor A may be 0.5, 0.8, 1, 1.2, 1.5, 1.8, 2, 2.5, 2.8, 3, 3.2, 3.5, 3.8, 4, 4.2, 4.5, 4.8, or 5 etc., or an interval value between any two endpoint values in the above, and definitely also may be other values in the above range, which is not limited herein. Without being bound by theory, by specifically limiting the ratio B/A of the sorting coefficient B to the crest factor A, agglomeration of the silicon-based active material particles can be avoided more effectively, thus effectively exerting high performance of the battery. When B/A>5, after the negative electrode material is subjected to slurry adjustment and coating, the silicon-based active material particles are aggregated, which affects the battery performance.

In some embodiments, an infrared spectrum of the negative electrode material tested in a range of wave number of 3200 cm⁻¹-3600 cm⁻¹ has a broad peak. Thus, it is indicated that the negative electrode material in the present disclosure has a polar group, such as -OH group, which is more advantageous to the binding of the negative electrode material with the binder.

In some embodiments, the wadell degree of sphericity of the negative electrode material is greater than or equal to 0.6. When the degree of sphericity is higher, the consistency of the electrode sheet is also significantly improved.

In some embodiments, the wadell degree of sphericity of the negative electrode material is greater than or equal to 0.8. Optionally, the wadell degree of sphericity of the negative electrode material may be 0.8, 0.9, 1.0, 1.1, 1.2, 1.3, 1.4, 1.5 and etc., or an interval value between any two endpoint values in the above.

In some embodiments, the negative electrode material further includes a coating layer located on a surface of the silicon-based active material, and the coating layer includes at least one of a flexible polymer and a conductive material. In some embodiments, the conductive material includes at least one of flake graphite or a nanocarbon material.

In some embodiments, the flexible polymer includes a natural flexible polymer and/or a synthetic flexible polymer.

In some embodiments, the flexible polymer includes at least one of polyolefin and derivatives thereof, polyvinyl alcohol and derivatives thereof, polyacrylic acid and derivatives thereof, polyamide and derivatives thereof, carboxymethyl cellulose and derivatives thereof, alginic acid and derivatives thereof, and polycarbonate and derivatives thereof.

In some embodiments, the flexible polymer has a weight-average molecular weight of 2000-1000000. Without being bound by theory, the weight-average molecular weight of the flexible polymer being in the above range can effectively avoid the phenomenon of agglomeration of the negative electrode material, and meanwhile better exert the buffering effect of the flexible polymer on the negative electrode material.

Optionally, the weight-average molecular weight of the flexible polymer may be, for example, 5000-500000, 10000-100000 or 50000-90000, such as 2000, 3000, 4000, 5000, 6000, 7000, 8000, 9000, 10000, 20000, 30000, 50000, 80000, 100000, 200000, 300000, 500000, 800000 or 1000000 and etc., or an interval value between any two endpoint values in the above, and definitely also may be other values in the above ranges, which is not limited herein.

In some embodiments, the flexible polymer contains a thermally crosslinked functional group, and the thermally crosslinked functional group includes at least one of an epoxy group, a carboxyl group, a hydroxyl group, an amino group, a double bond, and a triple bond.

In some embodiments, the flake graphite includes natural flake graphite and/or artificial flake graphite.

In some embodiments, the nanocarbon material includes at least one of conductive graphite, graphene, carbon nanotube, and carbon nanofiber.

In some embodiments, based on a total mass of the negative electrode material being 100%, a mass percentage of the flexible polymer is 0-10%, excluding 0. Without being bound by theory, the mass percentage of the flexible polymer being in the above range can effectively avoid the phenomenon of agglomeration of the negative electrode material, and meanwhile effectively exert the buffering effect of the flexible polymer on the negative electrode material, without affecting the ideal high specific capacity possessed by the negative electrode material in the present disclosure.

Optionally, based on the mass percentage of the negative electrode material being 100%, the mass percentage of the flexible polymer may be, for example, 0.1%-8.5%, 1%-7.5% or 2.5%-5%, such as 1%, 2%, 3%, 4%, 5%, 6%, 7%, 8%, 9% or 10%, or an interval value between any two endpoint values in the above, and definitely also may be other values in the above ranges, which is not limited herein.

In some embodiments, based on a total mass of the negative electrode material being 100%, a mass percentage of the flake graphite is 0-20%, excluding 0. Without being bound by theory, the mass percentage of the flake graphite being in the above range likewise can effectively avoid the phenomenon of coagulation of the material during combination, and meanwhile effectively exert the electrical conductivity of the flake graphite, without affecting the ideal high specific capacity possessed by the negative electrode material in the present disclosure. Optionally, based on a total mass of the negative electrode material being 100%, the mass percentage of the flake graphite may be, for example, 0.1%-16%, 1%-14% or 5%-8%, such as 1%, 2%, 3%, 4%, 5%, 6%, 7%, 8%, 9%, 10%, 11%, 12%, 13%, 14%, 15%, 16%, 17%, 18%, 19% or 20%, or an interval value between any two endpoint values in the above, and definitely also may be other values in the above ranges, which is not limited herein.

In some embodiments, based on a total mass of the negative electrode material being 100%, a mass percentage of the nanocarbon material is 0-5%, excluding 0. Without being bound by theory, the mass percentage of the nanocarbon material being in the above range likewise can effectively avoid phenomenon of agglomeration of the material during combination, and meanwhile effectively exert the electrical conductivity of the nanocarbon material, without affecting the high specific capacity possessed by the negative electrode material in the present disclosure.

Optionally, based on a total mass of the negative electrode material being 100%, the mass percentage of the nanocarbon material may be, for example, 0.1%-4.6%, 0.9%-4.1% or 1.9%-2.1%, such as 0.5%, 1.0%, 1.5%, 2.0%, 2.5%, 3.0%, 3.5%, 4.0%, 4.5% or 5%, or an interval value between any two endpoint values in the above, and definitely also may be other values in the above ranges, which is not limited herein.

In some embodiments, the coating layer has a thickness of 10 nm~5000 nm.

Optionally, the thickness of the coating layer may be, for example, 50 nm~1000 nm, 100 nm~800 nm or 300 nm~500 nm, such as 10 nm, 50 nm, 100 nm, 200 nm, 500 nm, 800 nm, 1000 nm, 2000 nm, 3000 nm, 4000 nm or 5000 nm, or an interval value between any two endpoint values in the above, and definitely also may be other values in the above ranges, which is not limited herein.

In some embodiments, a mass proportion of the coating layer in the negative electrode material is 0-20%, excluding 0.

Optionally, the mass proportion of the coating layer in the negative electrode material may be, for example, 2%-18%, 4%-15% or 6%-12%, such as 1%, 2%, 3%, 4%, 5%, 6%, 7%, 8%, 9%, 10%, 11%, 12%, 13%, 14%, 15%, 16%, 17%, 18%, 19% or 20%, or an interval value between any two endpoint values, and definitely also may be other values in the above ranges, which is not limited herein.

In some embodiments, the mass proportion of the coating layer in the negative electrode material is 2%-10%.

Without being bound by theory, the thickness and the proportion of the coating layer of the negative electrode material being in the above ranges of the present disclosure can effectively exert the buffering effect on the negative electrode material, and effectively ensure the electrical conductivity of the negative electrode material, without affecting the high specific capacity possessed by the negative electrode material in the present disclosure.

In some embodiments, the particle size D50 of the silicon-based active material is greater than 0 µm, and less than or equal to 80 µm, and methods of testing the particle size include a laser scattering method. Optionally, the particle size D50 of the silicon-based active material may be, for example, 10 µm-70 µm, 20 µm-60 µm or 30 µm-50 µm, such as 1 µm, 5 µm, 10 µm, 15 µm, 20 µm, 30 µm, 40 µm, 50 µm, 60 µm, 70 µm or 80 µm, or an interval value between any two endpoint values, and definitely also may be other values in the above ranges, which is not limited herein. Without being bound by theory, by reasonably selecting the particle size of the silicon-based active material, performances such as cycle performance and battery expansion after the negative electrode material of the lithium-ion battery is made into the battery can be ensured, and if the particle size D50 of the silicon-based active material is greater than 80 µm, the cycle performance and the battery expansion property of the battery will be adversely affected.

In some embodiments, the silicon-based active material has a specific surface area of 0-10 m²/g, and is other than 0. Optionally, the specific surface area of the silicon-based active material may be, for example, 1 m²/g-9 m²/g, 2 m²/g-8 m²/g or 3 m²/g-7 m²/g, such as 1 m²/g, 2 m²/g, 3 m²/g, 4 m²/g, 5 m²/g, 6 m²/g, 7 m²/g, 8 m²/g, 9 m²/g or 10 m²/g, or an interval value between any two endpoint values, and definitely also may be other values in the above ranges, which is not limited herein. Without being bound by theory, the specific surface area of the silicon-based active material being in the above ranges can ensure the high specific capacity and high first capacity efficiency of the negative electrode material in the present disclosure.

In some embodiments, tap density of the silicon-based active material is 0.5 g/m³~2 g/m³. Optionally, the tap density of the silicon-based active material may be 0.7 g/m³~1.8 g/m³, 0.9 g/m³~1.6 g/m³ or 1.0 g/m³~1.4 g/m³, such as 0.5 g/m³, 0.6 g/m³, 0.8 g/m³, 1.0 g/m³, 1.2 g/m³, 1.5 g/m³, 1.8 g/m³ or 2 g/m³, or an interval value between any two endpoint values, and definitely also may be other values in the above ranges, which is not limited herein. Without being bound by theory, the tap density of the silicon-based active material being in the above ranges likewise can ensure the high specific capacity and the high first capacity efficiency of the negative electrode material in the present disclosure.

In some embodiments, the negative electrode material further includes a doping material doped in the silicon-based active material, and the doping material includes at least one of an alkali metal, an alkali-earth metal, an alkali metal oxide, and an alkali-earth metal oxide.

In some embodiments, a weight percentage b of the doping material in the negative electrode material satisfies: 0<b≤20%.

Optionally, the alkali metal may be one selected from the group consisting of lithium, sodium, and potassium; the alkali-earth metal may be selected from the group consisting of magnesium, calcium, strontium, and barium; the alkali metal oxide may be selected from the group consisting of lithium oxide, sodium oxide, and potassium oxide; the alkali-earth metal oxide may be selected from the group consisting of magnesium oxide, calcium oxide, strontium oxide, and barium oxide. The mass percentage b of the doping material in the negative electrode material may be 1%, 3%, 5%, 8%, 10%, 12%, 15%, 18% or 20% and etc., or an interval value between any two endpoint values, and definitely also may be other values in the above range, which is not limited herein. Without being bound by theory, by doping a metal material in the negative electrode material, intrinsic conductivity of the silicon-based active material can be improved, and by further selecting a type and a content of the doping material, the conductivity of the silicon-based active material can be improved more effectively.

It should be noted that, in cases where the negative electrode materials in various embodiments in the above are not contradictory to each other, they can be randomly combined, for example, the particle size of the silicon-based active material and the specific surface area of the silicon-based active material are combined and limited and so on.

An embodiment of the present disclosure further provides a preparation method of a negative electrode material, wherein the preparation method includes the following steps:
step S100, preparing a powdered negative electrode material; and
step S200, adjusting a particle size of the prepared powdered negative electrode material to obtain the negative electrode material, wherein a crest factor A of particle size distribution of the negative electrode material satisfies: 0<A≤3, and wherein A=(D₉₅-D₅)/[2.5*(D₇₅-D₂₅)], and D₉₅, D₅, D₇₅, and D₂₅ respectively represent particle sizes of the negative electrode material when a volume percentage content on a cumulative curve reaches 95%, 5%, 75%, and 25%.

The negative electrode material includes a silicon-based active material, and the silicon-based active material includes at least one of SiOₓ, SiOₓ/C, SiOₓ/M, Si, Si/C, and Si/M, wherein 0<x≤2, and M includes at least one of metal, nonmetal, metal oxide, and nonmetal oxide.

In some embodiments, a sorting coefficient B of the particle size distribution of the negative electrode material satisfies: 0<B≤3, wherein B=(D₈₄-D₁₆)/4+(D₉₅-D₅)/6.6, and D₈₄, D₁₆, D₉₅, and D₅ respectively represent particle sizes when a volume percentage content on a cumulative curve reaches 84%, 16%, 95%, and 5%.

In some embodiments, a method of preparing the powdered negative electrode material further includes: pulverizing the silicon-based active material to obtain the powdered negative electrode material.

In the above solution, in the method of preparing the powdered negative electrode material, firstly, the silicon-based active material is pulverized, to obtain the powdered negative electrode material with a suitable particle size, and then the crest factor A of the particle size of the powdered negative electrode material is reasonably selected, to obtain the silicon-based negative electrode material with suitable particle size distribution, which can solve the problems such as low initial Coulombic efficiency, relatively poor electrical conductivity, relatively poor cycle and rate capabilities of the existing silicon-based active materials as negative electrode materials.

In some embodiments, the method of pulverizing includes crushing and ball milling.

In some embodiments, an apparatus used for the crushing includes a crusher, and a crushing power p of the crusher satisfies: 0<p≤300 kW.

In some embodiments, an apparatus used for the ball milling includes a ball mill, and a rotational speed v1 of the ball mill satisfies: 0<v1≤1500 rpm.

In some embodiments, an apparatus used for adjusting the particle size includes a classifier; and a frequency f of an induced draft fan of the classifier satisfies: 0<f≤100 Hz.

In some embodiments, the sorting coefficient B and the crest factor A satisfy: 0<B/A≤5.

In some embodiments, the particle size D50 of the silicon-based active material is greater than 0 µm, and less than or equal to 80 µm.

Optionally, the crushing power p of the crusher may be, for example, 40 kW-260 kW, 80 kW-210 kW or 120 kW-180 kW, such as 5 kW, 10 kW, 20 kW, 50 kW, 100 kW, 150 kW, 200 kW, 250 kW or 300 kW, or an interval value between any two endpoint values; the rotational speed v1 of the ball mill may be, for example, 50 rpm-1400 rpm, 300 rpm-1200 rpm or 500 rpm-900 rpm, such as 200 rpm, 400 rpm, 600 rpm, 800 rpm, 1000 rpm, 1200 rpm or 1500 rpm, or an interval value between any two endpoint values, and definitely also may be other values in the above ranges, which is not limited herein. Without being bound by theory, by reasonably selecting the crushing power p and the rotational speed v1 of the ball mill used in the pulverizing process, the silicon-based active material with a suitable particle size can be obtained, which facilitates the adjustment of the particle size later.

Optionally, the frequency f of an induced draft fan of the classifier may be, for example, 6 Hz-95 Hz, 25 Hz-75 Hz or 35 Hz-65 Hz, such as 1 Hz, 5 Hz, 10 Hz, 20 Hz, 30 Hz, 50 Hz, 70 Hz, 90 Hz or 100 Hz, or an interval value between any two endpoint values, and definitely also may be other values in the above ranges, which is not limited herein. Without being bound by theory, by reasonably selecting the frequency f of the induced draft fan of the classifier, the sorting coefficient B and the crest factor A of the particle size distribution of the negative electrode material can satisfy: 0<B≤3, and O<A≤3.

Optionally, the particle size D50 of the silicon-based active material may be, for example, 4 µm-80 µm, 25 µm-75 µm or 45 µm-65 µm, such as 1 µm, 5 µm, 10 µm, 15 µm, 20 µm, 30 µm, 40 µm, 50 µm, 60 µm, 70 µm or 80 µm, or an interval value between any two endpoint values, and definitely also may be other values in the above ranges, which is not limited herein. Without being bound by theory, by reasonably selecting the particle size of the silicon-based active material, performances such as cycle performance and battery expansion after the negative electrode material of the lithium-ion battery is made into the battery can be ensured and if the particle size D50 of the silicon-based active material is greater than 80 µm, the cycle performance and the battery expansion property of the battery will be adversely affected.

In some embodiments, the method of preparing the powdered negative electrode material further includes: carbon-coating the pulverized silicon-based active material with a carbon material to obtain the powdered negative electrode material, wherein a weight percentage a of the carbon material in the negative electrode material satisfies: 0<a≤15%.

Optionally, the weight percentage a of the carbon material in the negative electrode material may be 2.5%-14.5%, 4.5%-10.5% or 6.5%-8.5%, such as 1%, 2%, 3%, 4%, 5%, 6%, 7%, 8%, 9%, 10%, 11%, 12%, 13%, 14% or 15%, or an interval value between any two endpoint values, and definitely also may be other values in the above ranges, which is not limited herein. Without being bound by theory, by adding the carbon material to the negative electrode material, the carbon material is coated on the surface of the silicon-based active material, and the problems of volume change and electrical conductivity of the silicon-based negative electrode material of the lithium-ion battery during lithium intercalation and deintercalation can be effectively solved.

In some embodiments, a method of carbon-coating includes: mixing a third starting material including a sintered product and an organic carbon source and performing a thermal treatment on the mixture, in a protective atmosphere or a vacuum environment.

The above method of carbon-coating includes: mixing the third starting material including the above sintered product and the organic carbon source and performing a thermal treatment on the mixture, in a protective atmosphere or a vacuum environment.

Specifically, the above carbon-coating can be exemplified by gas-phase carbon-coating and/or solid-phase carbon-coating.

In some embodiments, the carbon-coating in the present disclosure uses a manner of gas-phase carbon-coating, and a specific method includes: heating the above sintered product to 600 °C-1000 °C in a protective atmosphere, feeding an organic carbon source gas, and keeping the temperature for 0.5 h-10 h, and then cooling. The organic carbon source gas can be selected from hydrocarbons (such as alkanes, cycloalkanes, alkenes, alkynes, and aromatic hydrocarbons), and may be, for example, at least one of methane, ethylene, acetylene, and benzene.

Optionally, a temperature of the thermal treatment in the manner of gas-phase carbon-coating specifically may be, for example, 650 ºC-950 ºC, 750 ºC-850 ºC or 780 ºC-820 ºC, such as 600 ºC, 700 ºC, 800 ºC, 900 ºC, and 1000 ºC, the temperature of the thermal treatment specifically may be kept for, for example, 1.0 h-9.0 h, 3.0 h-7.0 h, or 5.0 h-6.0 h, such as 0.5 h, 1.5 h, 2.5 h, 3.5 h, 4.5 h, 5.5 h, 6.5 h, 7.5 h, 8.5 h, 9.5 h, and 10 h, or an interval value between any two endpoint values, which is not limited herein. Optionally, the temperature of the thermal treatment may be 700-900 °C, and the temperature of the thermal treatment may be kept for 3-9 h.

In some embodiments, the carbon-coating in the present disclosure uses a manner of solid-phase carbon-coating, and a specific method includes: fusing the above sintered product with the carbon source for more than 0.5 h, carbonizing an obtained carbon mixture at 600 °C-1000 °C for 2 h-6 h, and cooling. The carbon source optionally includes at least one selected from the group consisting of polyolefins, resins, rubbers, saccharides (such as glucose, sucrose, starch, and cellulose), organic acids, and asphalt.

Optionally, the temperature of the thermal treatment in the manner of solid-phase carbon-coating specifically may be, for example, 650 ºC-950 ºC, 710 ºC-880 ºC or 750 ºC-810 ºC, such as 600 ºC, 700 ºC, 800 ºC, 900 ºC, and 1000 ºC, the temperature of the thermal treatment specifically may be 2 h, 3 h, 4 h, 5 h, 6 h and etc., or an interval value between any two endpoint values, which is not limited herein. Optionally, the temperature of the thermal treatment may be 700 ºC-900 ºC, and the temperature of the thermal treatment may be kept for 3 h-5 h.

In the above solution, the fusion is optionally performed in a fusion machine, and a rotational speed of the fusion machine is 500 r/min-3000 r/min.

Optionally, the rotational speed of the fusion machine specifically may be, for example, 900 r/min-2600 r/min, 1100 r/min-2200 r/min or 1400 r/min-1800 r/min, such as 500 r/min, 800 r/min, 1000 r/min, 1500 r/min, 2000 r/min, 2500 r/min, and 3000 r/min, or an interval value between any two endpoint values in the above, which is not limited herein. Optionally, the rotational speed of the fusion machine may be 1000-3000 r/min.

A gap width of cutter of the fusion machine can be selected according to needs, for example, 0.5 cm.

The protective atmosphere in the above manner of carbon-coating can be at least one selected from the group consisting of helium, neon, argon, and nitrogen.

In some embodiments, the method of preparing the powdered negative electrode material further includes: polymer-coating the pulverized silicon-based active material, or after carbon-coating the pulverized silicon-based active material with a carbon material, performing polymer-coating to obtain the powdered negative electrode material.

In some embodiments, a method of the polymer-coating includes the following steps:
dissolving a flexible polymer in a solvent to obtain a flexible polymer solution;
adding a conductive material to the flexible polymer solution under a condition of stirring, wherein the conductive material contains flake graphite and a nanocarbon material, to obtain a mixed coating solution;
adding an anti-solvent to the mixed coating solution, and stirring the mixture, to obtain a supersaturated mixed coating solution;
adding a silicon-based active substance to the supersaturated mixed coating solution under a condition of stirring, stirring the resultant, and separating the same, to obtain a negative electrode material precursor; and
performing a thermal treatment on the negative electrode material precursor, to obtain the powdered negative electrode material.

In some embodiments, the flexible polymer contains a thermally crosslinked functional group, and the thermally crosslinked functional group includes at least one of an epoxy group, a carboxyl group, a hydroxyl group, an amino group, a double bond, and a triple bond.

In some embodiments, the solvent includes at least one of water, methanol, ethanol, polypyrrolidone, isopropanol, acetone, petroleum ether, tetrahydrofuran, ethyl acetate, N,N-dimethylacetamide, N,N-dimethylformamide, n-hexane, and halogenated hydrocarbon.

In some embodiments, the anti-solvent includes a poor solvent for the flexible polymer.

In some embodiments, the anti-solvent includes at least one of methanol, ethanol, polypyrrolidone, isopropanol, acetone, petroleum ether, tetrahydrofuran, ethyl acetate, N,N-dimethylacetamide, N,N-dimethylformamide, n-hexane, and halogenated hydrocarbon.

In some embodiments, a temperature of the thermal treatment is 100 °C-400 °C, and the thermal treatment lasts for 2 h-12 h.

Optionally, the temperature of the thermal treatment may be, for example, 140 ºC-360 ºC, 180 ºC-280 ºC or 220 ºC-260 ºC, such as 100 ºC, 120 ºC, 150 ºC, 180 ºC, 200 ºC, 220 ºC, 250 ºC, 280 ºC, 300 ºC, 320 ºC, 350 ºC, 380 ºC or 400 ºC, or an interval value between any two endpoint values, and definitely also may be other values in the above ranges, which is not limited herein. The thermal treatment may last for, for example, 4.5 h-10.5 h, 6.5 h-9.5 h or 7.5 h-8.5 h, such as 2 h, 3 h, 4 h, 5 h, 6 h, 7 h, 8 h, 9 h, 10 h, 11 h or 12 h, or an interval value between any two endpoint values, and definitely also may be other values in the above ranges, which is not limited herein.

In some embodiments, the method of preparing the powdered negative electrode material further includes: doping the pulverized silicon-based active material with a doping material to obtain the powdered negative electrode material.

In some embodiments, the doping material includes at least one of an alkali metal, an alkali-earth metal, an alkali metal oxide, and an alkali-earth metal oxide.

In some embodiments, a weight percentage b of the doping material in the negative electrode material satisfies: 0<b≤20%.

Optionally, the alkali metal may be at least one selected from lithium, sodium, or potassium; the alkali-earth metal may be at least one selected from magnesium, calcium, strontium, or barium; the alkali metal oxide may be at least one selected from lithium oxide, sodium oxide, or potassium oxide; the alkali-earth metal oxide may be at least one selected from the group consisting of magnesium oxide, calcium oxide, strontium oxide, and barium oxide. The mass percentage b of the doping material in the negative electrode material may be 1%, 3%, 5%, 8%, 10%, 12%, 15%, 18% or 20% and etc., and definitely also may be other values in the above range, which is not limited herein. Without being bound by theory, by doping a metal material in the negative electrode material, intrinsic conductivity of the silicon-based active material can be improved, and by further selecting a type and a content of the doping material, the conductivity of the silicon-based active material can be improved more effectively. It should be noted that doping the pulverized silicon-based active material with the doping material can be performed before or after the carbon-coating.

An embodiment of the present disclosure further provides a lithium-ion battery, wherein the lithium-ion battery includes the above negative electrode material or the negative electrode material of the lithium-ion battery prepared by the above preparation method.

The present disclosure provides a negative electrode material and a preparation method thereof and a lithium-ion battery, which solve the problems such as non-uniformity of material particles and poor electrical conductivity, relatively poor cycle stability and rate capability of the existing silicon-based materials in the negative electrode sheet of the battery.

For the negative electrode material provided in the present disclosure, by adjusting the crest factor A of the particle size distribution of the negative electrode material to satisfy 0<A≤3, distribution at tail ends of two sides of the granularity of the negative electrode material can be more concentrated, and particles that differ too much from a median value of the particle size will not appear. By reasonably selecting the crest factor A of the particle size distribution, consistency of various particles of the negative electrode material can be guaranteed, so that when the negative electrode material is subjected to slurry adjustment and coating, the stability of the slurry is improved, and the binder and the conductive agent have better distribution consistency on surfaces of different particles, thus, the coated electrode sheet has good consistency, and different particles have high consistency in expansion and contraction in the charging and discharging process, it will not cause the electrode sheet to be extremely easily destroyed, deteriorate the cycle performance of the battery, or increase the expansion of the battery due to uneven expansion and contraction of local particles of the electrode sheet, finally, the performance consistency of the battery is high, and because large differences in the granularity of the material particles are avoided, the conductive agent can be uniformly and effectively attached to various material particles, and the rate capability of the battery is improved. By specially defining the silicon-based active material in the negative electrode material, the prepared negative electrode material can be allowed to have an ideal high specific capacity.

In addition, when the negative electrode material contains a coating layer, the crest factor A of the particle size distribution of the negative electrode material satisfies: 0<A≤3, so that the coating layer contained in the negative electrode material, such as the coating layer of the flexible polymer on each particle, has good thickness consistency, thus the buffering effect of the flexible polymer on the volume change during charging and discharging of the material is better, the cycle performance of the material is improved, and the expansion of the material is reduced.

Besides, in the present disclosure, by selecting the sorting coefficient B of the particle size distribution of the negative electrode material to satisfy 0<B≤3, it can be ensured that the distribution of the granularity of the negative electrode material in a middle segment (between two sides) of the granularity distribution curve is more concentrated, thus, when the negative electrode material is made into the electrode sheet with the binder, the binder is further evenly and consistently distributed, thus improving peel strength of the electrode sheet, and facilitating construction of a stable and complete conductive network with the electrode sheet.

Besides, by specifically limiting the ratio B/A of the sorting coefficient B to the crest factor A in the present disclosure, agglomeration of the silicon-based active material particles can be avoided more effectively, thus the negative electrode material is made to effectively exert high performance of the battery.

It should be understood that the above general description and the following detailed description are exemplary only, and cannot limit the present disclosure.

### Examples

Examples of the present disclosure are further described below through multiple examples. In the above, the examples of the present disclosure are not limited to the following specific examples. Within the scope of protection, appropriate modified implementations can be made.

### Example 1

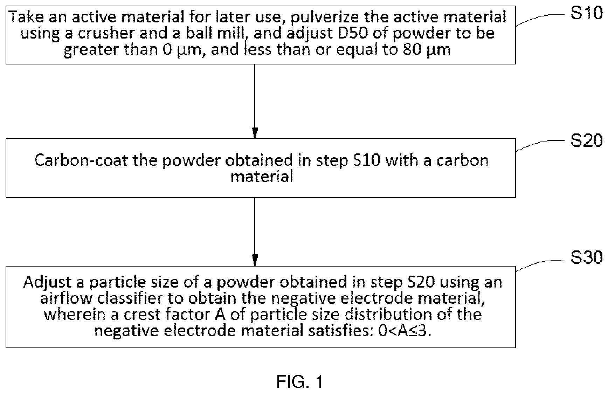

A preparation method of a negative electrode material of the lithium-ion battery, as shown in FIG. 1, includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 100 kW, and a rotational speed v1 of the ball mill was 800 rpm;
step S20, carbon-coating the SiO powder obtained in step S10 with a carbon material, wherein a weight percentage a of the carbon material in the negative electrode material was 7%; and
step S30, adjusting a particle size of a powder obtained in step S20 using an airflow classifier, wherein a frequency f of an induced draft fan of the classifier was 55 Hz, to obtain a final negative electrode material. A sorting coefficient B of particle size distribution of the negative electrode material was 2.00, a crest factor A was 1.80, and B/A=1.11.

### Example 2

A preparation method of a negative electrode material of the lithium-ion battery includes the following step S10 to step S30:
step S10, taking 1 kg of Si bulk material for later use, pulverizing the bulk material using a crusher and a ball mill, and adjusting D50 of Si powder to about 5 µm, wherein a crushing power p of the crusher was 100 kW, and a rotational speed v1 of the ball mill was 800 rpm;
step S20, carbon-coating the Si powder obtained in step S10 with a carbon material, wherein a weight percentage a of the carbon material in the negative electrode material was 6.7%; and
step S30, adjusting a particle size of a powder obtained in step S20 using an airflow classifier, wherein a frequency f of an induced draft fan of the classifier was 65 Hz, to obtain a final negative electrode material. A sorting coefficient B of particle size distribution of the negative electrode material was 1.50, a crest factor A was 1.50, and B/A=1.00.

### Example 3

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 100 kW, and a rotational speed v1 of the ball mill was 800 rpm;
step S20, carbon-coating the SiO powder obtained in step S10 with a carbon material, wherein a weight percentage a of the carbon material in the negative electrode material was 6.8%; and
step S30, adjusting a particle size of a powder obtained in step S20 using an airflow classifier, wherein a frequency f of an induced draft fan of the classifier was 35 Hz, to obtain a final negative electrode material. A sorting coefficient B of particle size distribution of the negative electrode material was 3.00, a crest factor A was 1.50, and B/A=2.00.

### Example 4

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 70 kW, and a rotational speed v1 of the ball mill was 1100 rpm;
step S20, carbon-coating the SiO powder obtained in step S10 with a carbon material, wherein a weight percentage a of the carbon material in the negative electrode material was 7.1%; and
step S30, adjusting a particle size of a powder obtained in step S20 using an airflow classifier, wherein a frequency f of an induced draft fan of the classifier was 70 Hz, to obtain a final negative electrode material. A sorting coefficient B of particle size distribution of the negative electrode material was 1.20, a crest factor A was 3.01, and B/A=0.40.

### Example 5

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 150 kW, and a rotational speed v1 of the ball mill was 600 rpm;
step S20, carbon-coating the SiO powder obtained in step S10 with a carbon material, wherein a weight percentage a of the carbon material in the negative electrode material was 7.1%; and
step S30, adjusting a particle size of a powder obtained in step S20 using an airflow classifier, wherein a frequency f of an induced draft fan of the classifier was 40 Hz, to obtain a final negative electrode material. A sorting coefficient B of particle size distribution of the negative electrode material was 2.50, a crest factor A was 0.50, and B/A=5.00.

### Example 6

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 150 kW, and a rotational speed v1 of the ball mill was 650 rpm;
step S20, carbon-coating the SiO powder obtained in step S10 with a carbon material, wherein a weight percentage a of the carbon material in the negative electrode material was 7.3%; and
step S30, adjusting a particle size of a powder obtained in step S20 using an airflow classifier, wherein a frequency f of an induced draft fan of the classifier was 46 Hz, to obtain a final negative electrode material. A sorting coefficient B of particle size distribution of the negative electrode material was 2.10, a crest factor A was 0.70, and B/A=3.00.

### Example 7

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 110 kW, and a rotational speed v1 of the ball mill was 750 rpm;
step S20, carbon-coating the SiO powder obtained in step S10 with a carbon material, wherein a weight percentage a of the carbon material in the negative electrode material was 7%; and
step S30, adjusting a particle size of a powder obtained in step S20 using an airflow classifier, wherein a frequency f of an induced draft fan of the classifier was 75 Hz, to obtain a final negative electrode material. A sorting coefficient B of particle size distribution of the negative electrode material was 1.01, a crest factor A was 1.20, and B/A=0.84.

### Example 8

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 120 kW, and a rotational speed v1 of the ball mill was 700 rpm;
step S20, carbon-coating the SiO powder obtained in step S10 with a carbon material, wherein a weight percentage a of the carbon material in the negative electrode material was 7.2%; and
step S30, adjusting a particle size of a powder obtained in step S20 using an airflow classifier, wherein a frequency f of an induced draft fan of the classifier was 60 Hz, to obtain a final negative electrode material. A sorting coefficient B of particle size distribution of the negative electrode material was 1.60, a crest factor A was 1.00, and B/A=1.60.

### Example 9

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 20 µm, wherein a crushing power p of the crusher was 90 kW, and a rotational speed v1 of the ball mill was 400 rpm;
step S20, carbon-coating the SiO powder obtained in step S10 with a carbon material, wherein a weight percentage a of the carbon material in the negative electrode material was 6.9%; and
step S30, adjusting a particle size of a powder obtained in step S20 using an airflow classifier, wherein a frequency f of an induced draft fan of the classifier was 58 Hz, to obtain a final negative electrode material. A sorting coefficient B of particle size distribution of the negative electrode material was 1.80, a crest factor A was 0.80, and B/A=2.24.

### Example 10

A preparation method of a negative electrode material of the lithium-ion battery includes the following step S10 to step S40:
step S10, taking 1 kg of SiO bulk material for later use, pulverizing the bulk material using a crusher and a ball mill, and adjusting D50 of SiO powder to about 20 µm, wherein a crushing power p of the crusher was 90 kW, and a rotational speed v1 of the ball mill was 600 rpm;
step S20, carbon-coating the SiO powder obtained in step S10 with a carbon material, wherein a weight percentage a of the carbon material in the negative electrode material was 7.1%; and
Step S30, doping the SiO powder having been carbon-coated in step S20 with a doping material, wherein the doping material was MgO, and a weight percentage b of the doping material in the negative electrode material was 5%; and
step S40, adjusting a particle size of a powder obtained in step S30 using an airflow classifier, wherein a frequency f of an induced draft fan of the classifier was 56 Hz, to obtain a final negative electrode material. A sorting coefficient B of particle size distribution of the negative electrode material was 1.91, a crest factor A was 1.00, and B/A=1.91.

### Example 11

Step S10, taking 1 kg of SiO bulk material for later use, pulverizing the bulk material using a crusher and a ball mill, and adjusting D50 of SiO powder to about 5 µm, wherein a crushing power p of the crusher was 100 kW, and a rotational speed v1 of the ball mill was 800 rpm; and
step S20, adjusting a particle size of a powder obtained in step S10 using an airflow classifier, wherein a frequency f of an induced draft fan of the classifier was 58 Hz, to obtain a final negative electrode material. A sorting coefficient B of particle size distribution of the negative electrode material was 2.20, a crest factor A was 1.89, and B/A=1.16.

### Example 12

Step S10, taking 1 kg of SiO bulk material for later use, pulverizing the bulk material using a crusher and a ball mill, and adjusting D50 of SiO powder to about 20 µm, wherein a crushing power p of the crusher was 90 kW, and a rotational speed v1 of the ball mill was 600 rpm;
step S20, doping the SiO powder in step S10 with a doping material, wherein the doping material was MgO, and a weight percentage b of the doping material in the negative electrode material was 5%; and
step S30, adjusting a particle size of a powder obtained in step S20 using an airflow classifier, wherein a frequency f of an induced draft fan of the classifier was 55 Hz, to obtain a final negative electrode material. A sorting coefficient B of particle size distribution of the negative electrode material was 1.76, a crest factor A was 1.22, and B/A=1.44.

### Example 13

Step S10, taking 1 kg of SiO bulk material for later use, pulverizing the bulk material using a crusher and a ball mill, and adjusting D50 of SiO powder to about 20 µm, wherein a crushing power p of the crusher was 90 kW, and a rotational speed v1 of the ball mill was 600 rpm;
step S20, doping the SiO powder in step S10 with a doping material, wherein the doping material was MgO, and a weight percentage b of the doping material in the negative electrode material was 5%;
step S30, carbon-coating the powder obtained in step S20 with a carbon material, wherein a weight percentage a of the carbon material in the negative electrode material was 7.3%; and
step S40, adjusting a particle size of a powder obtained in step S30 using an airflow classifier, wherein a frequency f of an induced draft fan of the classifier was 56 Hz, to obtain a final negative electrode material. A sorting coefficient B of particle size distribution of the negative electrode material was 2.17, a crest factor A was 1.22, and B/A=1.78.

### Example 14

Step S10, taking 1 kg of SiO bulk material for later use, pulverizing the bulk material using a crusher and a ball mill, and adjusting D50 of SiO powder to about 5 µm, wherein a crushing power p of the crusher was 100 kW, and a rotational speed v1 of the ball mill was 800 rpm;
step S20, treating the SiO powder obtained in step S10 using a fusion machine, wherein a rotational speed of the fusion machine was 1000 r/min, and duration of the treatment was 6 h;
step S30, carbon-coating the SiO powder obtained in step S20 with a carbon material, wherein a weight percentage a of the carbon material in the negative electrode material was 6.9%; and
step S40, adjusting a particle size of a powder obtained in step S30 using an airflow classifier, wherein a frequency f of an induced draft fan of the classifier was 55 Hz, to obtain a final negative electrode material. A sorting coefficient B of particle size distribution of the negative electrode material was 1.95, a crest factor A was 1.75, B/A=1.11, and degree of sphericity was 0.79.

### Example 15

Step S10, taking 1 kg of SiO bulk material for later use, pulverizing the bulk material using a crusher and a ball mill, and adjusting D50 of SiO powder to about 5 µm, wherein a crushing power p of the crusher was 100 kW, and a rotational speed v1 of the ball mill was 800 rpm;
step S20, treating the SiO powder obtained in step S10 using a fusion machine, wherein a rotational speed of the fusion machine was 1000 r/min, and duration of the treatment was 6.2 h;
step S30, carbon-coating the SiO powder obtained in step S20 with a carbon material, wherein a weight percentage a of the carbon material in the negative electrode material was 7.0%; and
step S40, adjusting a particle size of a powder obtained in step S30 using an airflow classifier, wherein a frequency f of an induced draft fan of the classifier was 55 Hz, to obtain a final negative electrode material. A sorting coefficient B of particle size distribution of the negative electrode material was 1.90, a crest factor A was 1.67, B/A=1.14, and degree of sphericity was 0.82.

### Example 16

Step S10, taking 1 kg of SiO bulk material for later use, pulverizing the bulk material using a crusher and a ball mill, and adjusting D50 of SiO powder to about 5 µm, wherein a crushing power p of the crusher was 100 kW, and a rotational speed v1 of the ball mill was 800 rpm;
step S20, treating the SiO powder obtained in step S10 using a fusion machine, wherein a rotational speed of the fusion machine was 2500 r/min, and duration of the treatment was 8.5 h;
step S30, carbon-coating the SiO powder obtained in step S20 with a carbon material, wherein a weight percentage a of the carbon material in the negative electrode material was 7.1%; and
step S40, adjusting a particle size of a powder obtained in step S30 using an airflow classifier, wherein a frequency f of an induced draft fan of the classifier was 55 Hz, to obtain a final negative electrode material. A sorting coefficient B of particle size distribution of the negative electrode material was 1.93, a crest factor A was 1.62, B/A=1.19, and degree of sphericity was 0.91.

### Example 17

Step S10, taking 1 kg of SiO bulk material for later use, pulverizing the bulk material using a crusher and a ball mill, and adjusting D50 of SiO powder to about 5 µm, wherein a crushing power p of the crusher was 100 kW, and a rotational speed v1 of the ball mill was 800 rpm;
step S20, carbon-coating the SiO powder obtained in step S10 with a carbon material, wherein a weight percentage a of the carbon material in the negative electrode material was 7%;
step S30, adjusting a particle size of a powder obtained in step S20 using an airflow classifier, wherein a frequency f of an induced draft fan of the classifier was 55 Hz, to obtain a negative electrode material with adjusted granularity; and
step S40, dissolving 4 g of polyacrylic acid in 100 g of distilled water, after sufficient dissolution at a temperature of 40 °C, adding 1 g of carbon nanofibers under a condition of stirring, adding 200 g of ethanol after stirring for 2 hours, continuing the stirring for 0.5 h, then adding 90 g of the negative electrode material obtained in step S30 under a condition of stirring, after stirring the mixture for 2 hours at a temperature of 60 °C, cooling the resultant to room temperature, separating the material by suction filtration, then thermally treating the resultant in a 180 °C drying oven for 4 hours, and after cooling, taking out and obtaining a corresponding SiOₓ negative electrode material coated with polyacrylic acid and carbon nanofibers, wherein a sorting coefficient B of particle size distribution of the obtained negative electrode material was 2.00, a crest factor A was 1.78, and B/A=1.12.

### Example 18

Step S10, taking 1 kg of SiO bulk material for later use, pulverizing the bulk material using a crusher and a ball mill, and adjusting D50 of SiO powder to about 5 µm, wherein a crushing power p of the crusher was 110 kW, and a rotational speed v1 of the ball mill was 750 rpm;
step S20, carbon-coating the SiO powder obtained in step S10 with a carbon material, wherein a weight percentage a of the carbon material in the negative electrode material was 7%;
step S30, adjusting a particle size of a powder obtained in step S20 using an airflow classifier, wherein a frequency f of an induced draft fan of the classifier was 20 Hz, to obtain a negative electrode material with adjusted granularity; and
step S40, dissolving 4 g of polyacrylic acid in 100 g of distilled water, after sufficient dissolution at a temperature of 40 °C, adding 1 g of carbon nanofibers under a condition of stirring, adding 200 g of ethanol after stirring for 2 hours, continuing the stirring for 0.5 h, then adding 90 g of the negative electrode material obtained in step S30 under stirring, after stirring the mixture for 2 hours at a temperature of 60 °C, cooling the resultant to room temperature, separating the material by suction filtration, then thermally treating the resultant in a 180 °C drying oven for 4 hours, and after cooling, taking out and obtaining a corresponding SiOₓ negative electrode material coated with polyacrylic acid and carbon nanofibers, wherein a sorting coefficient B of particle size distribution of the obtained negative electrode material was 2.88, a crest factor A was 1.27, and B/A=2.27.

### Example 19

Step S10, taking 1 kg of SiO bulk material for later use, pulverizing the bulk material using a crusher and a ball mill, and adjusting D50 of SiO powder to about 20 µm, wherein a crushing power p of the crusher was 90 kW, and a rotational speed v1 of the ball mill was 600 rpm;
Step S20, doping the SiO powder having been carbon-coated in step S10 with a doping material, wherein the doping material was Li₂O, and a weight percentage b of the doping material in the negative electrode material was 4.5%;
step S30, carbon-coating the powder obtained in step S20 with a carbon material, wherein a weight percentage a of the carbon material in the negative electrode material was 7.2%; and
step S40, adjusting a particle size of a powder obtained in step S30 using an airflow classifier, wherein a frequency f of an induced draft fan of the classifier was 56 Hz, to obtain a final negative electrode material. A sorting coefficient B of particle size distribution of the negative electrode material was 2.19, a crest factor A was 1.19, and B/A=1.84.

### Example 20

Step S10, taking 1 kg of SiO bulk material for later use, pulverizing the bulk material using a crusher and a ball mill, and adjusting D50 of SiO powder to about 5 µm, wherein a crushing power p of the crusher was 110 kW, and a rotational speed v1 of the ball mill was 750 rpm;
step S20, carbon-coating the SiO powder obtained in step S10 with a carbon material, wherein a weight percentage a of the carbon material in the negative electrode material was 7%;
step S30, adjusting a particle size of a powder obtained in step S20 using an airflow classifier, wherein a frequency f of an induced draft fan of the classifier was 20 Hz, to obtain a negative electrode material with adjusted granularity; and
step S40, dissolving 4 g of sodium alginate (a derivative of alginic acid) in 100 g of distilled water, after sufficient dissolution at a temperature of 40 °C, adding 1 g of conductive graphite under a condition of stirring, adding 200 g of ethanol after stirring for 2 hours, continuing the stirring for 0.5 hours, then adding 90 g of the negative electrode material obtained in step S30 under stirring, after stirring the mixture for 2 hours at a temperature of 60 °C, cooling the resultant to room temperature, separating the material by suction filtration, then thermally treating the material in a 180 °C drying oven for 4 hours, and after cooling, taking out and obtaining a corresponding SiOₓ negative electrode material coated with sodium alginate and conductive graphite, wherein a sorting coefficient B of particle size distribution of the obtained negative electrode material was 2.90, a crest factor A was 1.30, and B/A=2.23.

### Example 21

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 100 kW, and a rotational speed v1 of the ball mill was 1000 rpm;
step S20, carbon-coating the SiO powder obtained in step S10 with a carbon material, wherein a weight percentage a of the carbon material in the negative electrode material was 6.9%; and
step S30, adjusting a particle size of a powder obtained in step S20 using an airflow classifier, wherein a frequency f of an induced draft fan of the classifier was 110 Hz, to obtain a final negative electrode material. A sorting coefficient B of particle size distribution of the negative electrode material was 3.77, a crest factor A was 0.71, and B/A=5.31.

### Example 22

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 110 kW, and a rotational speed v1 of the ball mill was 750 rpm;
step S20, carbon-coating the SiO powder obtained in step S10 with a carbon material, wherein a weight percentage a of the carbon material in the negative electrode material was 7%; and
step S30, adjusting a particle size of a powder obtained in step S20 using an airflow classifier, wherein a frequency f of an induced draft fan of the classifier was 10 Hz, to obtain a final negative electrode material. A sorting coefficient B of particle size distribution of the negative electrode material was 3.19, a crest factor A was 1.30, and B/A=2.45.

### Example 23

A preparation method of a negative electrode material of the lithium-ion battery includes the following step S10 to step S30:
step S10, taking 1 kg of Si bulk material for later use, pulverizing the bulk material using a crusher and a ball mill, and adjusting D50 of Si powder to about 5 µm, wherein a crushing power p of the crusher was 150 kW, and a rotational speed v1 of the ball mill was 550 rpm;
step S20, carbon-coating the Si powder obtained in step S10 with a carbon material, wherein a weight percentage a of the carbon material in the negative electrode material was 6.9%; and
step S30, adjusting a particle size of a powder obtained in step S20 using an airflow classifier, wherein a frequency f of an induced draft fan of the classifier was 53 Hz, to obtain a final negative electrode material. A sorting coefficient B of particle size distribution of the negative electrode material was 2.42, a crest factor A was 0.46, and B/A=5.24.

### Comparative Example 1

A preparation method of a negative electrode material of the lithium-ion battery includes the following step S10 to step S30:
step S10, taking 1 kg of SiO bulk material for later use, pulverizing the bulk material using a crusher and a ball mill, and adjusting D50 of SiO powder to about 5 µm, wherein a crushing power p of the crusher was 150 kW, and a rotational speed v1 of the ball mill was 550 rpm;
step S20, carbon-coating the SiO powder obtained in step S10 with a carbon material, wherein a weight percentage a of the carbon material in the negative electrode material was 7.1%; and
step S30, adjusting a particle size of a powder obtained in step S20 using an airflow classifier, wherein a frequency f of an induced draft fan was 65 Hz, to obtain a final negative electrode material. A sorting coefficient B of particle size distribution of the negative electrode material was 1.63, a crest factor A was 3.04, and B/A=0.54.

### Effect analysis

The negative electrode materials obtained in the above examples and comparative examples were subjected to the following performance tests.
(1) Granularity distribution test: a Malvern 2000 particle analyzer was used to test granularity distribution of the materials, wherein a refractive index was 2.42, opacity was 8%-20%, and a dispersing agent was water.
(2) Test of first capacity efficiency: a. preparation of a lithium-ion battery: each of the prepared negative electrode materials, conductive carbon black, CMC (carboxymethyl cellulose)/SBR (styrene-butadiene rubber) were coated onto a copper foil in a ratio of 75:15:10, to prepare a negative electrode sheet, a metal lithium sheet acted as a counter electrode, and a PP/PE film acted as a separator, to prepare a button battery; b. the electrochemical performance of the battery was tested using a LAND and NEWARE 5 V/10 mA type battery tester, wherein a voltage was 1.5 V, a current was 0.1 C, and first efficiency=first charging specific capacity/first discharging specific capacity.
(3) Test of cycle performance: a. preparation of a lithium-ion battery: each of the prepared negative electrode materials was mixed with graphite in a ratio of 15:85 to obtain a negative electrode active substance, the negative electrode active substance, conductive carbon black, CMC, and SBR were coated onto a copper foil in a ratio of 92:4:2:2, to prepare a negative electrode sheet, a metal lithium sheet acted as a counter electrode, a PP/PE film acted as a separator, to prepare a button battery; b. the electrochemical performance of the battery was tested using a LAND and NEWARE 5 V/10 mA type battery tester, wherein a voltage was 1.5 V, a current was 0.1 C, and 50-cycle capacity retention ratio=50^{th} discharging specific capacity/first discharging specific capacity.
(4) Test of expansion property: a. preparation of a lithium-ion battery: each of the prepared negative electrode materials was mixed with graphite in a ratio of 15:85 to obtain a negative electrode active substance, the negative electrode active substance, conductive carbon black, CMC, and SBR were coated onto a copper foil in a ratio of 92:4:2:2, to prepare a negative electrode sheet, a thickness of the negative electrode sheet was measured using a micrometer, recorded as L1, a metal lithium sheet acted as a counter electrode, a PP/PE film acted as a separator, to prepare a button battery; b. the electrochemical performance of the battery was tested using a LAND and NEWARE 5 V/10 mA type battery tester, wherein a voltage was 1.5 V, and a current was 0.1 C. After 50 cycles, the battery was disassembled, and the thickness of the negative electrode sheet was measured using the micrometer, recorded as L2, and 50-cycle electrode sheet expansion rate=(L2-copper foil thickness)/(L1-copper foil thickness)*100%.
   (5) Test of battery consistency: 10 identical batteries were prepared according to the methods in (2) and (3), and consistency of 50-cycle capacity retention ratios and 50-cycle electrode sheet expansion rates of the 10 batteries was compared. The consistency is expressed by relative standard deviation (RSD) of 10 groups of 50-cycle capacity retention ratios and 50-cycle electrode sheet expansion rates.
   (6) Scanning electron microscope test: the material was tested using a S4800 scanning electron microscope, and state of microscopic particles was observed.
   (7) Test of wadell degree of sphericity: the particle size distribution was measured using a laser particle analyzer, to obtain an equivalent volume diameter within each particle size range. This equivalent volume diameter was taken as a particle diameter of all spheres within the extremely small granularity distribution range, and all particles within this range were equivalent to ideal spheres, a specific surface area in each particle size distribution range was calculated, and then the specific surface area of spheres having the same volume as that of all the particles was obtained by weighting volume ratio %, thus, it is obtained the degree of sphericity of the spherical particle prepared by plasma=the calculated surface area of the sphere having the same volume as the particle/the specific surface area of the particle measured by a specific surface tester.
   (8) Rate and peel strength test:
      a. preparation of a lithium-ion battery: the composite materials prepared in the above examples and comparative examples were respectively mixed with graphite in a mass ratio of 15:85 to obtain a negative electrode active substance, then the negative electrode active substance, conductive carbon black, CMC, and SBR were uniformly mixed in a mass ratio of 92:4:2:2, and coated on a copper foil, to prepare a negative electrode sheet, and peel strength of the negative electrode sheet was tested by a cross-cut tester method;
      b. taking another negative electrode sheet, taking a metal lithium sheet as a positive electrode sheet, and taking PP/PE as a separator, to prepare a button battery; and
      c. testing the button battery by a LAND and NEWARE 5 V/10 mA type battery tester, wherein a voltage was 1.5 V, a current was 0.1 C and 3 C, respectively, and 3 C/0.1 C=discharge specific capacity at 3 C current/discharge specific capacity at 0.1 C current.

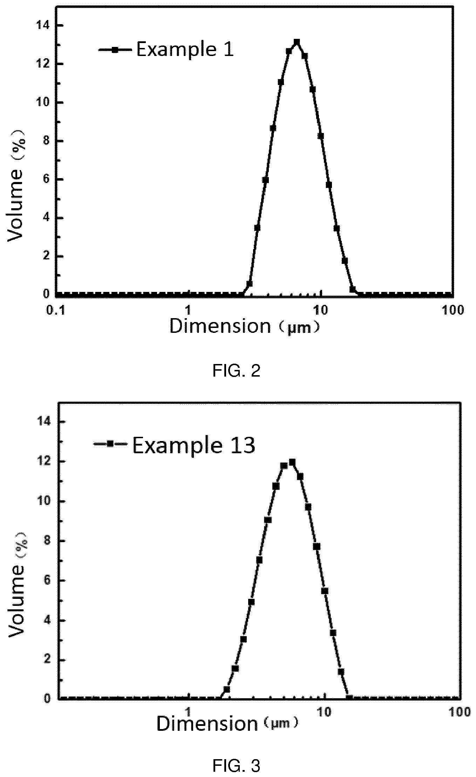

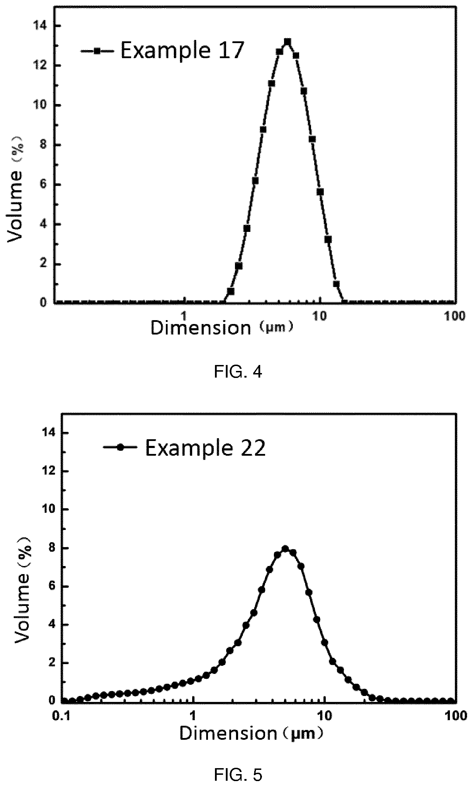

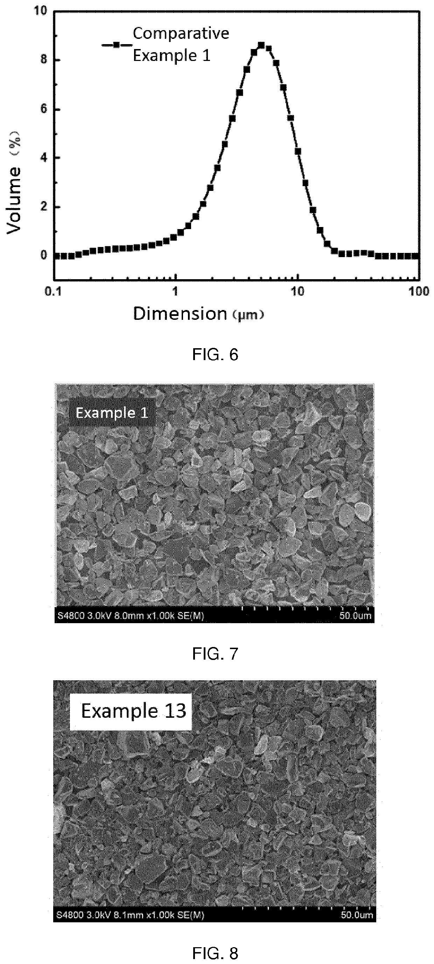

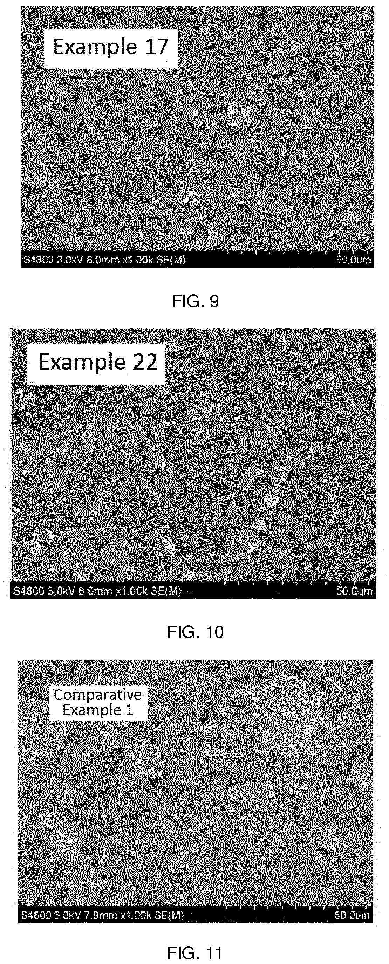

Data recorded in the battery test and the experimental process are as shown in Table 1 below, particle size distribution results of Examples 1, 13, 17, and 22 and Comparative Example 1 are as shown in FIG. 2 to FIG. 5 and FIG. 6, respectively, and scanning electron microscopy results of Examples 1, 13, 17, and 22 and Comparative Example 1 are as shown in FIG. 7 to FIG. 10 and FIG. 11, respectively.

**Table 1 Comparison Table of Experimental Data in Examples and Comparative Examples**

| | B | A | B/A | Wadell degree of sphericity | Capacity (mAh/g) | First capacity efficiency (%) | 50-cycle capacity retention ratio (%, mean value) | 50-cycle capacity retention ratio RSD (relative standard deviation) (%) | 50-cycle electrode sheet expansion rate (%, mean value) | 50-cycle electrode sheet expansion rate RSD (relative standard deviation) (%) | Rate 3C/0.1C (%) | Peel strength (mN/mm) |
|---|---|---|---|---|---|---|---|---|---|---|---|---|
| Example 1 | 2.00 | 1.80 | 1.11 | 0.71 | 1616.3 | 77.9 | 90.1 | 0.25 | 40.1 | 0.66 | 88.6 | 3.5 |
| Example 2 | 1.50 | 1.50 | 1.00 | 0.69 | 3133.7 | 89.3 | 85 | 0.32 | 50 | 0.55 | 85.2 | 3.3 |
| Example 3 | 3.00 | 1.50 | 2.00 | 0.70 | 1595.1 | 77.6 | 88.5 | 0.46 | 41.2 | 0.72 | 87.0 | 3.3 |
| Example 4 | 1.20 | 3.01 | 0.40 | 0.69 | 1633.2 | 77.1 | 91.8 | 0.18 | 38.9 | 0.45 | 88.6 | 3.2 |
| Example 5 | 2.50 | 0.50 | 5.00 | 0.67 | 1615.4 | 76.9 | 88.0 | 0.70 | 42.0 | 0.86 | 87.9 | 3.1 |
| Example 6 | 2.10 | 0.70 | 3.00 | 0.71 | 1600.1 | 76.9 | 89.1 | 0.53 | 39.8 | 0.70 | 87.3 | 3.1 |
| Example 7 | 1.01 | 1.20 | 0.84 | 0.68 | 1609.2 | 77.3 | 90.6 | 0.38 | 39.3 | 0.48 | 88.3 | 3.5 |
| Example 8 | 1.60 | 1.00 | 1.60 | 0.65 | 1600.1 | 77.5 | 89.5 | 0.58 | 40.2 | 0.56 | 88.2 | 3.4 |
| Example 9 | 1.80 | 0.80 | 2.24 | 0.66 | 1569.1 | 77.0 | 88.1 | 0.71 | 42.1 | 0.77 | 87.7 | 3.2 |
| Example 10 | 1.91 | 1.00 | 1.91 | 0.68 | 1558.2 | 77.3 | 92.0 | 0.21 | 39.0 | 0.53 | 85.5 | 2.8 |
| Example 11 | 2.20 | 1.89 | 1.16 | 0.66 | 1200.1 | 69.1 | 58.2 | 0.33 | 41.3 | 0.71 | 70.6 | 2.9 |
| Example 12 | 1.76 | 1.22 | 1.44 | 0.67 | 1500.1 | 81.2 | 66.1 | 0.75 | 40.7 | 0.76 | 72.3 | 2.7 |
| Example 13 | 2.17 | 1.22 | 1.78 | 0.69 | 1489.3 | 81.6 | 88.7 | 0.68 | 41.9 | 0.73 | 82.9 | 2.8 |
| Example 14 | 1.95 | 1.75 | 1.11 | 0.79 | 1608.8 | 76.5 | 90.9 | 0.28 | 39.7 | 0.52 | 88.1 | 2.9 |
| Example 15 | 1.90 | 1.67 | 1.14 | 0.82 | 1619.0 | 77.0 | 92.3 | 0.25 | 39.3 | 0.51 | 88.2 | 3.0 |
| Example 16 | 1.93 | 1.62 | 1.19 | 0.91 | 1622.1 | 76.3 | 93.0 | 0.20 | 38.9 | 0.37 | 88.0 | 3.0 |
| Example 17 | 2 | 1.78 | 1.12 | 0.70 | 1557.9 | 77.1 | 91.7 | 0.29 | 39.3 | 0.51 | 89.3 | 3.6 |
| Example 18 | 2.88 | 1.27 | 2.27 | 0.70 | 1568.3 | 77.3 | 89.7 | 0.33 | 39.8 | 0.58 | 89.0 | 3.4 |
| Example 19 | 2.19 | 1.19 | 1.84 | 0.69 | 1470.1 | 82.0 | 89.1 | 0.66 | 40.9 | 0.71 | 83.3 | 2.9 |
| Example 20 | 2.90 | 1.30 | 2.23 | 0.69 | 1561.7 | 76.8 | 89.5 | 0.37 | 39.6 | 0.59 | 88.0 | 3.1 |
| Example 21 | 3.77 | 0.71 | 5.31 | 0.68 | 1599.1 | 77.3 | 78.5 | 4.05 | 46.0 | 6.33 | 71.1 | 1.8 |
| Example 22 | 3.19 | 1. 30 | 2.45 | 0.67 | 1615.3 | 76.8 | 80.5 | 3.91 | 45.8 | 6.06 | 70.1 | 1.7 |
| Example 23 | 2.42 | 0. 46 | 5.24 | 0.69 | 1612.5 | 77.5 | 75.2 | 2.17 | 55.3 | 6.35 | 69.6 | 1.5 |
| Comparative Example 1 | 1.63 | 3. 04 | 0.54 | 0.68 | 1600.9 | 77.1 | 80.6 | 3.12 | 49.2 | 5.98 | 66.5 | 1.6 |

**Table 2 Table of Particle Size Distribution of Negative Electrode Material of Experimental Data in Examples and Comparative Examples**

| | D5 (µm) | D16 (µm) | D25 (µm) | D75 (µm) | D84 (µm) | D95 (µm) |
|---|---|---|---|---|---|---|
| Example 1 | 2.26 | 3.58 | 4.34 | 6.06 | 6.9 | 9.98 |
| Example 2 | 3.02 | 4.05 | 4.71 | 6.18 | 6.72 | 8.53 |
| Example 3 | 1.59 | 2.8 | 4.2 | 6.8 | 8.89 | 11.3 |
| Example 4 | 3.13 | 4.26 | 4.99 | 5.64 | 6.1 | 8.02 |
| Example 5 | 2.86 | 3.11 | 3.48 | 8.76 | 9.11 | 9.46 |
| Example 6 | 3.35 | 3.89 | 4.45 | 8.02 | 8.5 | 9.61 |
| Example 7 | 4.06 | 4.41 | 4.99 | 6.03 | 6.56 | 7.17 |
| Example 8 | 3.27 | 3.86 | 4.27 | 6.43 | 6.98 | 8.69 |
| Example 9 | 3.67 | 4.15 | 4.92 | 7.52 | 8.19 | 8.89 |
| Example 10 | 16.5 | 17.3 | 17.9 | 20.3 | 21.3 | 22.5 |
| Example 11 | 2.19 | 3.67 | 4.75 | 6.42 | 7.69 | 10.1 |
| Example 12 | 16 | 17.1 | 17.8 | 19.6 | 20.8 | 21.5 |
| Example 13 | 15.6 | 16.4 | 17.4 | 19.6 | 21 | 22.3 |
| Example 14 | 2.36 | 3.56 | 4.31 | 6.00 | 6.89 | 9.77 |
| Example 15 | 2.41 | 3.60 | 4.28 | 6.03 | 6.79 | 9.71 |
| Example 16 | 2.44 | 3.59 | 4.34 | 6.12 | 6.95 | 9.65 |
| Example 17 | 2.33 | 3.66 | 4.54 | 6.26 | 7.01 | 9.99 |
| Example 18 | 1.95 | 3 | 4.22 | 6.98 | 9.21 | 10.7 |
| Example 19 | 15.5 | 16.5 | 17.55 | 19.9 | 21 | 22.5 |
| Example 20 | 2.01 | 3.1 | 4.32 | 7.05 | 9.33 | 10.9 |
| Example 21 | 0.55 | 1.12 | 1.98 | 8.15 | 9.55 | 11.5 |
| Example 22 | 1.55 | 2.53 | 4.1 | 7.19 | 9.21 | 11.6 |
| Example 23 | 3.25 | 3.4 | 3.55 | 9.01 | 9.26 | 9.56 |
| Comparative Example 1 | 2.55 | 3.81 | 4.75 | 5.64 | 6.25 | 9.31 |

As can be seen from the results in FIGS. 2-5, by adjusting the granularity of the silicon-based active material coated with the carbon layer, and selecting the sorting coefficient B and the crest factor A of the particle size, the negative electrode material with suitable particle size distribution is obtained, and the consistency of the particles of the negative electrode material can be guaranteed. It can be seen from the above Table 1 that the lithium-ion battery prepared with the negative electrode material in the present disclosure has excellent capacity efficiency, cycle performance, charge-discharge performance, and expansion property, and also has high peel strength, thus the performance of the lithium-ion battery can be effectively improved. By comparing Examples 21-23 with Comparative Example 1, it can be seen that in the present disclosure, by selecting the crest factor A of the particle size distribution, the negative electrode material with relatively suitable particle size distribution can be obtained, so that the performance of the negative electrode material can be improved, and particularly the rate performance of the negative electrode material is improved. Besides, by comparing Examples 1-20 with Comparative Example 1, it can be seen that in the present disclosure, by selecting the crest factor A and the sorting coefficient B of the particle size, and selecting B/A, the granularity distribution of the negative electrode material can be more concentrated, the 50-cycle capacity retention ratio, the rate capability, and the peel strength of the negative electrode material are further improved, and the expansion rate of the negative electrode material is further reduced.

The above is only optional examples of the present disclosure, and is not used to limit the present disclosure. For those skilled in the art, various modifications and changes can be made to the present disclosure. Any modifications, equivalent substitutions, improvements and the like made within the spirit and principle of the present disclosure should be covered within the scope of protection of the present disclosure.

### Industrial Applicability

The present disclosure provides a negative electrode material and a preparation method thereof and a lithium-ion battery. For the negative electrode material in the present disclosure, by limiting the crest factor A of the particle size distribution of the negative electrode material, consistency of particles of the negative electrode material can be ensured, so that the coated electrode sheet has good consistency, further enabling the performance consistency of the battery to be high, and improving the performance of the battery; in addition, by further limiting the sorting coefficient B and the ratio B/A, the negative electrode material can be allowed to have better particle size distribution and higher battery performance, and therefore has excellent practical performance and a wide application prospect.

## Claims

1. A negative electrode material, **characterized in that** a crest factor A of particle size distribution of the negative electrode material satisfies: 0<A≤3, and wherein A=(D₉₅-D₅)/[2.5*(D₇₅-D₂₅)], and D₉₅, D₅, D₇₅, and D₂₅ respectively represent particle sizes of the negative electrode material when a volume percentage content on a cumulative curve reaches 95%, 5%, 75%, and 25%; and
the negative electrode material comprises a silicon-based active material, the silicon-based active material comprises at least one of SiOₓ, SiOₓ/C, SiOₓ/M, Si, Si/C, and Si/M, wherein 0<x≤2, and the M comprises at least one of a metal, a nonmetal, a metal oxide, and a nonmetal oxide.

2. The negative electrode material according to claim 1, wherein the negative electrode material comprises at least one of following features (1)-(12):
(1) the particle size distribution of the negative electrode material is: 0<D₅≤65 µm, 0<D₂₅≤69 µm, 0<D₇₅≤75 µm, and 0<D₉₅≤79 µm;
(2) an infrared spectrum of the negative electrode material tested in a range of wave number of 3200 cm⁻¹-3600 cm⁻¹ has a broad peak;
(3) wadell degree of sphericity of the negative electrode material is greater than or equal to 0.8;
(4) a particle size D50 of the silicon-based active material is greater than 0 µm, and equal to or less than 80 µm;
(5) a specific surface area of the silicon-based active material is 0-10 m²/g, and is other than 0;
(6) a tap density of the silicon-based active material is 0.5 g/m³~2 g/m³;
(7) the negative electrode material further comprises a doping material doped in the silicon-based active material;
(8) the negative electrode material further comprises a doping material doped in the silicon-based active material, and the doping material comprises at least one of an alkali metal, an alkali-earth metal, an alkali metal oxide, and an alkali-earth metal oxide;
(9) the negative electrode material further comprises a doping material doped in the silicon-based active material, and a weight percentage b of the doping material in the negative electrode material satisfies: 0<b≤20%;
(10) a sorting coefficient B of the particle size distribution of the negative electrode material satisfies: 0<B≤3, wherein B=(D₈₄-D₁₆)/4+(D₉₅-D₅)/6.6, and D₈₄, D₁₆, D₉₅, and D₅ respectively represent particle sizes of the negative electrode material when a volume percentage content on the cumulative curve reaches 84%, 16%, 95%, and 5%;
(11) the particle size distribution of the negative electrode material is: O<D₅≤65 µm, 0<D₁₆≤67 µm, 0<D₈₄≤77 µm, and 0<D₉₅≤79 µm; and
(12) the sorting coefficient B and the crest factor A of the particle size distribution of the negative electrode material satisfy: 0<B/A≤5.

3. The negative electrode material according to claim 1, wherein the negative electrode material further comprises a coating layer located on a surface of the silicon-based active material, and the coating layer comprises at least one of a flexible polymer and a conductive material.

4. The negative electrode material according to claim 3, wherein the negative electrode material further comprises at least one of following features (1)-(13):
(1) the conductive material comprises flake graphite and a nanocarbon material;
(2) the flexible polymer comprises a natural flexible polymer and/or a synthetic flexible polymer;
(3) the flexible polymer comprises at least one of polyolefin and derivatives thereof, polyvinyl alcohol and derivatives thereof, polyacrylic acid and derivatives thereof, polyamide and derivatives thereof, carboxymethyl cellulose and derivatives thereof, alginic acid and derivatives thereof, and polycarbonate and derivatives thereof;
(4) the flexible polymer has a weight-average molecular weight of 2000-1000000;
(5) the flexible polymer contains a thermally crosslinked functional group, and the thermally crosslinked functional group comprises at least one of an epoxy group, a carboxyl group, a hydroxyl group, an amino group, a double bond, and a triple bond;
(6) the flake graphite comprises natural flake graphite and/or artificial flake graphite;
(7) the nanocarbon material comprises at least one of conductive graphite, graphene, carbon nanotube, and carbon nanofiber;
(8) based on a total mass of the negative electrode material being 100%, a mass percentage of the flexible polymer is 0-10%, excluding 0;
(9) based on the total mass of the negative electrode material being 100%, a mass percentage of the flake graphite is 0-20%, excluding 0;
(10) based on the total mass of the negative electrode material being 100%, a mass percentage of the nanocarbon material is 0-5%, excluding 0;
(11) the coating layer has a thickness of 10 nm~5000 nm;
(12) a mass proportion of the coating layer in the negative electrode material is 0-20%, excluding 0; and
(13) the mass proportion of the coating layer in the negative electrode material is 2%-10%.

5. A preparation method of a negative electrode material, **characterized by** comprising following step:
preparing a powdered negative electrode material;
adjusting a particle size of the prepared powdered negative electrode material to obtain the negative electrode material, wherein a crest factor A of a particle size distribution of the negative electrode material satisfies: 0<A≤3, and wherein A=(D₉₅-D₅)/[2.5*(D₇₅-D₂₅)], and D₉₅, D₅, D₇₅, and D₂₅ respectively represent particle sizes of the negative electrode material when a volume percentage content on a cumulative curve reaches 95%, 5%, 75%, and 25%; and
the negative electrode material comprises a silicon-based active material, and the silicon-based active material comprises at least one of SiOₓ, SiO_{X}/C, SiOₓ/M, Si, Si/C, and Si/M, wherein 0<x≤2, and the M comprises at least one of a metal, a nonmetal, a metal oxide, and a nonmetal oxide.

6. The preparation method according to claim 5, wherein a sorting coefficient B of the particle size distribution of the negative electrode material satisfies: 0<B≤3, wherein B=(D₈₄-D₁₆)/4+(D₉₅-D₅)/6.6, and D₈₄, D₁₆, D₉₅, and D₅ respectively represent particle sizes when a volume percentage content on the cumulative curve reaches 84%, 16%, 95%, and 5%.

7. The preparation method according to claim 6, wherein a method of preparing the powdered negative electrode material comprises: pulverizing the silicon-based active material to obtain the powdered negative electrode material.

8. The preparation method according to claim 7, wherein the preparation method at least satisfies one of following features (1)~(6):
(1) a method of the pulverizing comprises crushing and ball milling;
(2) an apparatus used for the crushing comprises a crusher, and a crushing power p of the crusher satisfies: 0<p≤300 kW;
(3) an apparatus used for the ball milling comprises a ball mill, and a rotational speed v1 of the ball mill satisfies: 0<v1≤1500 rpm;
(4) an apparatus used for adjusting the particle size comprises a classifier; and a frequency f of an induced draft fan of the classifier satisfies: 0<f≤100 Hz;
(5) the sorting coefficient B and the crest factor A satisfy: 0<B/A≤5; and
(6) a particle size D50 of the silicon-based active material is greater than 0 µm, and less than or equal to 80 µm.

9. The preparation method according to claim 8, wherein the method of preparing the powdered negative electrode material further comprises: carbon-coating the pulverized silicon-based active material with a carbon material to obtain the powdered negative electrode material, wherein a weight percentage a of the carbon material in the negative electrode material satisfies: 0<a≤15%.

10. The preparation method according to claim 8 or 9, wherein the method of preparing the powdered negative electrode material further comprises: polymer-coating the pulverized silicon-based active material or carbon-coating the pulverized silicon-based active material with a carbon material to obtain the powdered negative electrode material.

11. The preparation method according to claim 10, wherein a method of the polymer-coating comprises following steps:
dissolving a flexible polymer in a solvent to obtain a flexible polymer solution;
adding a conductive material to the flexible polymer solution under a condition of stirring, wherein the conductive material contains flake graphite and a nanocarbon material, to obtain a mixed coating solution;
adding an anti-solvent to the mixed coating solution, and stirring a mixture, to obtain a supersaturated mixed coating solution;
adding a silicon-based active substance to the supersaturated mixed coating solution under a condition of stirring, and then performing stirring and separating, to obtain a negative electrode material precursor; and
performing a thermal treatment on the negative electrode material precursor, to obtain the powdered negative electrode material.

12. The preparation method according to claim 11, wherein the preparation method comprises at least one of following features (1)~(6):
(1) the flexible polymer contains a thermally crosslinked functional group, and the thermally crosslinked functional group comprises at least one of an epoxy group, a carboxyl group, a hydroxyl group, an amino group, a double bond, and a triple bond;
(2) the solvent comprises at least one of water, methanol, ethanol, polypyrrolidone, isopropanol, acetone, petroleum ether, tetrahydrofuran, ethyl acetate, N,N-dimethylacetamide, N,N-dimethylformamide, n-hexane, and halogenated hydrocarbon;
(3) the anti-solvent comprises a poor solvent for the flexible polymer;
(4) the anti-solvent comprises at least one of methanol, ethanol, polypyrrolidone, isopropanol, acetone, petroleum ether, tetrahydrofuran, ethyl acetate, N,N-dimethylacetamide, N,N-dimethylformamide, n-hexane, and halogenated hydrocarbon;
(5) a temperature of the thermal treatment is 100 ºC-400 ºC; and
(6) the thermal treatment lasts for 2 h-12 h.

13. The preparation method according to claim 8, wherein the method of preparing the powdered negative electrode material further comprises: doping the pulverized silicon-based active material with a doping material to obtain the powdered negative electrode material; and
the preparation method at least satisfies one of following features:
(1) the doping material comprises at least one of an alkali metal, an alkali-earth metal, an alkali metal oxide, and an alkali-earth metal oxide; and
(2) a weight percentage b of the doping material in the negative electrode material satisfies: 0<b≤20%.

14. A lithium-ion battery, **characterized by** comprising the negative electrode material according to any one of claims 1-4 or the negative electrode material prepared by the preparation method according to any one of claims 5-13.
